# EUROPEAN PATENT APPLICATION

(11) **EP 0 709 857 A1**
(43) Date of publication of application: **01.05.1996**
(21) Application number: 95307320.2
(22) Date of filing: 16.10.1995
(51) Int. Cl.: G21C 3/332, G21C 3/322

(54) **Nuclea fuel assembly channel comprising spacer centering mass**

(30) Priority: 25.10.1994 US 328434
(71) Applicant: GENERAL ELECTRIC COMPANY, Schenectady, NY 12345 (US)
(72) Inventor: Matzner, Bruce (NMN), San Jose, California 95124 (US)
(74) Representative: Pratt, Richard Wilson

(57) **Abstract**

In a fuel assembly comprising a plurality of fuel rods positioned in a spaced array between upper and lower tie-plates; a plurality of axially spaced spacers (S1,S2,S3,S4) for maintaining the plurality of fuel rods in the spaced array; an open ended flow channel (30) surrounding the array for conducting coolant upward about the fuel rods, the open ended channel (30) having a polygon shaped cross section with substantially flat side sections connected between the corner sections; an improvement which includes a plurality of interior projections (36) at each of a plurality of axially spaced locations in an upper portion only of the channel (30), the locations corresponding to placement of the spacers (S1-S3) within the upper two phase portion of the channel.

## Description

### TECHNICAL FIELD

This invention relates to fuel bundles in boiling water nuclear reactors. More specifically, the invention relates to improved designs for the channel and spacer components of the fuel bundle in the upper two-phase region of the bundle, which optimizes critical power performance.

### BACKGROUND

Fuel bundles in boiling water nuclear reactors (BWR's) include an array of upstanding side-by-side fuel rods supported between upper and lower tie plates. Each bundle requires multiple spacers (e.g., seven, axially spaced along the bundle) for the maintenance of the fuel rods in designed spaced apart relationship. The bundle is surrounded between the tie plates by a fuel bundle channel, which is hollow, elongated sleeve-like member of generally square cross-sectional shape. The lower tie plate is configured to permit the inflow of moderating water coolant through the channel while the upper tie plate permits the outflow of both water coolant and generated steam from the channel. The surrounding channel thus confines the flow of coolant to a path around the steam generating fuel rods separate from a water flooded core bypass region surrounding each fuel bundle.

A conventional fuel assembly comprises a plurality of fuel elements or rods supported between an upper tie plate and a lower tie plate. The fuel rods pass through a plurality of fuel rod spacers which provide intermediate support and retain the elongated rods in spaced relation. Each spacer contains a matrix of ferrules F, each adapted to receive and surround a corresponding fuel rod. In a typical arrangement, seven such spacers may be located along the approximate foot length of the fuel bundle.

Each of the fuel rods includes an elongated tube containing fissile fuel and other materials, such as fertile fuel, burnable poison, inert material or the like, sealed in the tube by upper and lower end plugs, respectively. Lower end plugs are formed with extensions for registration and support within openings formed in the lower tie plate. At the same time, the upper end plugs are formed with extensions which fit into support openings in the upper tie plate.

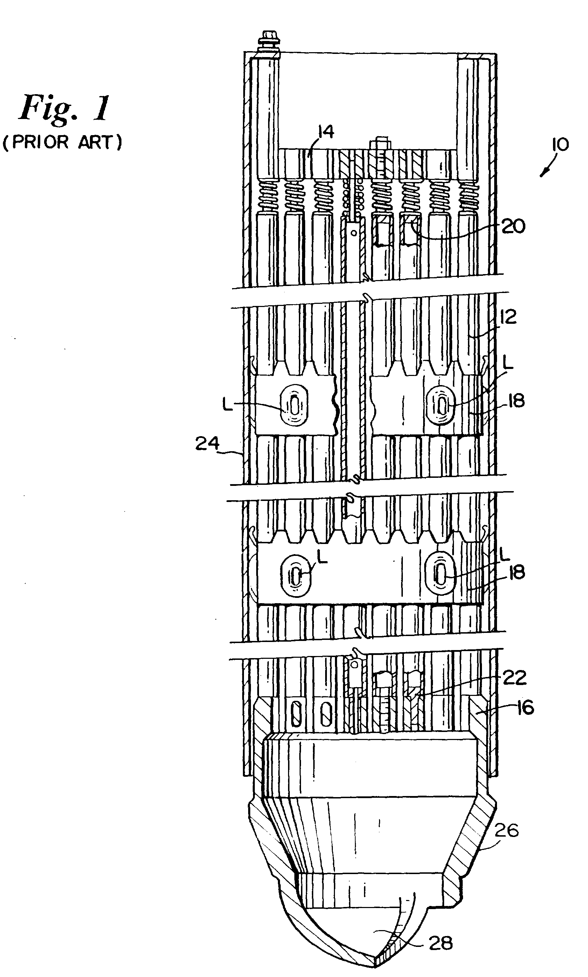

The fuel assembly also includes a thin walled tubular flow channel of substantially square cross section, sized to form a sliding fit over the upper and lower tie plates as well as spacers so that the channel may be easily mounted to or removed from the fuel bundle. In prior spacer constructions, projecting lobes have been formed at spaced locations about the peripheral bands of the spacers for the purpose of centering the bundle within the channel, with predetermined clearance between the spacer lobes and channel (one such arrangement is shown in Figure 1, discussed below).

The lower tie plate is formed with a nosepiece adapted to support the fuel assembly in a socket in a core support plate (not shown) in the reactor pressure vessel. The end of this nosepiece is formed with an opening which receives pressurized coolant in an upward flow direction.

Critical power capability is one of the more important performance parameters for a BWR fuel bundle. Conventional BWR fuel bundles are placed in the surrounding channels with appropriate clearance (about 025 inch total clearance) between the channel and the contact points or lobes of the bundle spacers to allow the channel to slide over the bundle during final bundle assembly. Thereafter, however, it is impossible to know the exact position of the bundle relative to the channel walls which necessitates making conservative assumptions about corner rod-to-channel spacing, thus, losing considerable critical power performance potential.

It has been observed during full scale bundle tests that outer rod critical power performance may be as much as 5 to 10% higher when the bundle is centered within the channel rather than in its maximum offset position.

One proposed solution to the problem is offered in commonly owned U.S. Patent No. 5,267,291 wherein the peripheral bands of the fuel bundle spacers are modified to include pairs of projections of different height on adjacent sides of the bands, in combination with leaf springs on those sides of the bands which have projections of lesser height, to maintain a more uniform spacing of the fuel rod bundle from the channel walls.

### DISCLOSURE OF THE INVENTION

It is the principal objective of this invention to more accurately center the fuel bundle spacers in the channel and thereby provide optimized critical power performance for any BWR fuel bundle regardless of its lattice or spacer design. It has also been observed that outer rod critical power performance can be improved if, in the upper two-phase region of the bundle, the liquid film flowing on the channel wall is deflected toward the outer rods. This invention proposes to accomplish both of these goals simultaneously. To this end, modifications have been made to the standard configurations of both the channel walls and the fuel rod spacers, but only in the upper two-phase region of the bundle.

In an exemplary embodiment of the invention, the upper two-phase region of the fuel bundle channel is formed with peripheral indentations at axially spaced locations corresponding to the locations of the upper second and third fuel bundle spacers, i.e., the second and third spacers from the top of the bundle. Depending on specific design considerations, the channel may be modified at locations corresponding to the first and/or fourth spacers as well. In other words, the cross sectional area of the channel walls at the precise axial locations of the upper spacers, is reduced about the four sides of the channel. As a result, the spacers in these reduced area regions must also be modified so that they may fit within the indentations in the channel walls. The remaining spacers in the bundle may be of conventional design.

In one exemplary embodiment, the reduced size spacers can be centered within the indented areas by utilizing solid stops between the spacers and the indentations on two adjacent sides of the channel, and leaf spring members on the remaining adjacent two sides, again between the indentations and the spacer. In another embodiment, the reduced size spacers can be centered within the indented areas of the channel utilizing fasteners inserted from the outside and through the channel walls. Other suitable attachment techniques are also within the scope of this invention.

Thus, in its broader aspects, the present invention relates to a fuel assembly comprising a plurality of fuel rods positioned in a spaced array by upper and lower tie-plates, a plurality of axially spacers for maintaining the plurality of fuel rods in the spaced array; an open ended flow channel surrounding the array for conducting coolant upward about the fuel rods, the open ended channel having a polygon shaped cross section with substantially flat side sections connected between the corner sections; an improvement in the flow channel comprising a plurality of interior projections at each of a plurality of axially spaced locations in an upper portion only of the channel, the locations corresponding to placement of fuel rod spacers within the upper portion of the channel.

In another aspect, the invention relates to a fuel assembly comprising a plurality of fuel rods positioned in a spaced array between upper and lower tie-plates; a plurality of axially spaced spacers for maintaining the plurality of fuel rods in the spaced array; an open ended flow channel surrounding the array for conducting coolant upward about the fuel rods, the open ended channel having a polygon shaped cross section with substantially flat side sections connected between the corner sections; the improvement comprising means for redirecting coolant on interior surfaces of the channel toward outer fuel rods in the array and simultaneously centering at least a pair of the spacers within the channel..

Other objects and advantages of the invention will become apparent from the detailed description which follows.

### BRIEF DESCRIPTION OF THE DRAWINGS

FIGURE 1 is a side elevation, partly in section, of a conventional fuel bundle for use in a boiling water nuclear reactor;
FIGURE 2 is a side section view of a fuel bundle channel modified in accordance with the invention;
FIGURE 3 is a sectional plan view taken along the line 2-2 of Figure 1;
FIGURE 4 is a section view in plan illustrating the fuel bundle channel of this invention, with a spacer held in place, centered within the indentations in accordance with one embodiment of the invention; and
FIGURE 5 is a plan view in section, illustrating the fuel bundle channel modified in accordance with the invention, and with a spacer held in place centered within the indentations in accordance with another embodiment of the invention.

### BEST MODE FOR CARRYING OUT THE INVENTION

A conventional fuel assembly 10 for a boiling water reactor comprises a plurality of fuel elements or rods 12 supported between an upper tie plate 14 and a lower tie plate 16. The fuel rods 12 pass through a plurality of fuel rod spacers 18 which provide intermediate support and retain the elongated rods in spaced relation. Each spacer contains a matrix of ferrules F, each adapted to receive and surround a corresponding fuel rod 12. In a typical arrangement, seven such spacers 18 may be located along the approximate 13 foot length of the fuel bundle.

Each of the fuel rods 12 includes an elongated tube containing fissile fuel and other materials, such as fertile fuel, burnable poison, inert material or the like, sealed in the tube by upper and lower end plugs 20, 22, respectively. Lower end plugs 22 are formed with extensions for registration and support within openings formed in the lower tie plate 16. At the same time, the upper end plugs 20 are formed with extensions which fit into support openings in the upper tie plate 14.

The fuel assembly 10 also includes a thin walled tubular flow channel 24 of substantially square cross section, sized to form a sliding fit over the upper and lower tie plates 14 and 16 as well as spacers 18 so that the channel may be easily mounted to or removed from the fuel bundle. Further in this regard, the peripheral bands of spacers 18 may be provided with projecting lobes or stops L which are intended to generally center the fuel bundle within the channel 24. It should be noted however, that there remains a specified clearance between the spacer lobes L and the interior walls of the channel 24 on the order of about .012 inch on each side, or about .025 inch total clearance between any two opposite sides of the spacer and adjacent channel walls.

The lower tie plate 16 is formed with a nosepiece 26 adapted to support the fuel assembly 10 in a socket in a core support plate (not shown) in the reactor pressure vessel. The end of this nosepiece is formed with an opening 28 which receives pressurized coolant in an upward flow direction.

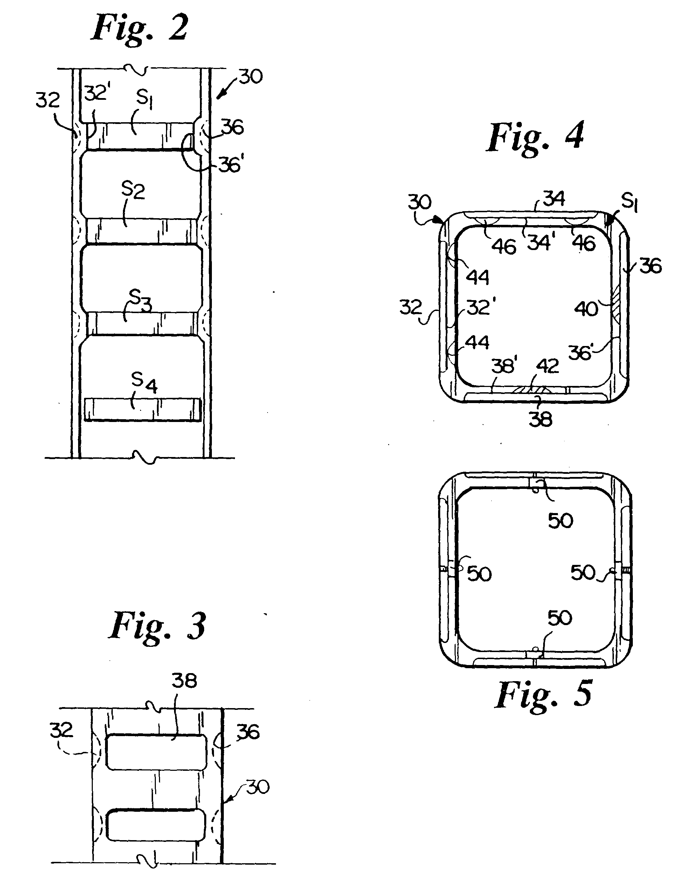

With reference now particularly to Figures 2-5, a fuel bundle channel 30 in accordance with this invention is modified in the upper two-phase (steam and water) region to include four horizontally elongated recesses or indentations 32, 34, 36 and 38 about the periphery of the channel at each of three axially spaced locations corresponding to the three uppermost spacers S₁, S₂, S₃ in the bundle. By way of contrast, a fourth conventional spacer S₄ is shown at an otherwise unmodified location along the channel. It will be appreciated that the recesses or indentations 32, 34, 36 and 38 form corresponding projections 32', 34', 36' and 38' within the interior of the channel 30 to thereby reduce the interior cross-sectional area of the channel at each such location. It will be understood that the channel 30 and the spacers S₁ - S₄ are shown in simplified form in Figures 2-5 to facilitate a clearer understanding of the invention.

It should be pointed out also that while channel 30 and spacers S₁ - S₃ are shown as modified in accordance with this invention in Figure 2, the preferred arrangement is to modify the channel and respective spacers at only the S₂ and S₃ positions, with the application of this invention to the S₁ and S₄ locations optional, depending on design considerations. In any case, in a typical seven spacer arrangement, the channel and spacers at the locations of remaining spacers S₅ - S₇ (not shown) may be of conventional design.

Since the channel wall indentations at each of the illustrated spacer locations S₁, S₂ and S₃ are identical, only one such indentation need be described in detail. It should be noted in any event that, as shown in Figure 4, indentations shown at 32, 34, 36 and 38 are centered on respective sides of the channel 30. Each indentation is 20 to 40 mm in height and 25 to 50 mm in length in the preferred embodiment, and projects inwardly into the enclosed channel space forming the corresponding projections 32', 34', 36' and 38' which effectively decrease the cross-sectional area of the channel at the respective spacer locations S₁, S₂ and S₃. Other dimensions and/or indentation shapes may be equally suitable. Alternatively, the channel itself may be provided with smooth interior wall surfaces and solid metal strips may be applied to the interior channel surfaces, thus serving the same function as the illustrated indentations 32, 34, 36 and 38. This is a less preferred arrangement, however, particularly in terms of manufacturing and related costs.

Spacers S₁, S₂ and S₃ necessarily are required to have a different band design from the conventional design spacers in the lower part of the bundle, in order to accommodate the reduced channel cross-sectional areas at these locations. More specifically, the upper spacers S₁, S₂ and S₃ are designed with reduced perimeters so that they will be centered inside the indentations 32', 34', 36' and 38' in the channel wall at each of the corresponding spacer locations. Centering of each spacer within the indented channel area can be achieved in a variety of ways including essentially a near zero clearance between the indentations and the peripheral bands of the spacers.

Alternatively, the spacer S₁, for example (and as shown in Figure 4), can be centered within the area created by indentations 32, 34, 36 and 38 (and as also defined by interior channel projections 32', 34', 36' and 38') through the utilization of springs 40, 42 on adjacent spacer sides with solid stop pairs 44, 46 located on the remaining adjacent sides of the spacer peripheral band. Springs 40, 42 are preferably leaf springs mounted within the spacer peripheral band. It will be appreciated that a peripheral leaf spring (not shown) extending completely about the spacer peripheral band may also be utilized in place of the stops 44, 46 and springs 40, 42.

In another exemplary embodiment, as shown in Figure 5, each of the sides of the spacer peripheral band is secured to an adjacent channel wall indentation by a suitable fastener 50, which may be a simple nut and bolt arrangement as shown. It will be appreciated that the above noted means for centering the spacer within the indented areas are not intended to be limiting, and any suitable means may be employed for the same purpose and for achieving the same channel geometry.

In use, the indentations 32, 34, 36, 38 and corresponding interior projections 32', 34', 36' and 38' in the channel side walls at each of the spacer locations S₃ and S₄ (and optionally at S₁ and S₂), serve a dual function. First, they redirect liquid film flow on the channel wall toward the outer rods of the fuel bundle in the region of boiling transition occurrence, to thereby enhance critical power performance. As such, the invention here eliminates a separate need for flow trippers usually found axially between the spacers. Second, these indentations/projections maintain the spacers centered within the channel, thus avoiding critical power reduction due to uneven spacing.

It has also been determined that the presence of the indentations/projections in the upper two phase portion of the channel does not hinder the installation or removal of the channel to any significant extent.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. In a fuel assembly comprising a plurality of fuel rods positioned in a spaced array between upper and lower tie-plates; a plurality of axially spaced spacers for maintaining said plurality of fuel rods in said spaced array; an open ended flow channel surrounding said array for conducting coolant upward about said fuel rods, said open ended channel having a polygon shaped cross section with substantially flat side sections connected between said corner sections; the improvement comprising:
a plurality of interior projections at each of a plurality of axially spaced locations in an upper portion only of said channel, said locations corresponding to placement of said spacers within said upper portion of said channel.

2. The fuel assembly of claim 1 wherein, at each of said locations, each of said plurality of interior projections is formed by a corresponding recess in an exterior surface of said channel, such that said channel has a reduced interior cross sectional area at each said location.

3. The fuel assembly of claim 2 wherein said plurality of locations comprise at least two locations in said upper portion of said channel corresponding to placement of second and third spacers from the upper tie plate.

4. The fuel assembly of claim 2 wherein each elongated recess measures about 20 to 40 mm in height and about 25 to 40 mm in length.

5. The fuel assembly of claim 2 wherein spacers within said channel adjacent said projections have a reduced perimeter relative to spacers in a lower portion of said channel.

6. The fuel assembly of claim 2 including means for holding said spacers at said locations centered with respect to said interior projections.

7. The fuel assembly of claim 2 wherein said reduced perimeter spacers are held in place between said projections by a plurality of fasteners.

8. The fuel assembly of claim 2 and including resilient means for holding said reduced perimeter spacers in place between said interior projections.

9. The fuel assembly of claim 8 wherein said resilient means comprises a pair of spring elements on two adjacent sides of said spacer in combination with a pair of stops on remaining two adjacent sides of said spacer.

10. The fuel assembly of claim 1 wherein said channel has four sides and wherein one interior projection is centered within each of said sides.

11. In a fuel assembly comprising a plurality of fuel rods positioned in a spaced array between upper and lower tie-plates; a plurality of axially spaced spacers for maintaining said plurality of fuel rods in said spaced array; an open ended flow channel surrounding said array for conducting coolant upward about said fuel rods, said open ended channel having a polygon shaped cross section with substantially flat side sections connected between said corner sections; the improvement comprising:
means for redirecting coolant on interior surfaces of said channel toward outer fuel rods in said array and simultaneously centering at least a pair of said spacers within said channel.

12. the fuel assembly of claim 11 wherein said means are located at two locations corresponding to placement of second and third spacers from said upper tie plate.
